(19) **Europäisches Patentamt**
**European Patent Office**
**Office européen des brevets**

(11) **EP 4 592 094 A1**

(12) **EUROPEAN PATENT APPLICATION**

(43) Date of publication:
**30.07.2025   Bulletin 2025/31**

(21) Application number: **24222717.1**

(22) Date of filing: **23.12.2024**

(51) International Patent Classification (IPC):
***B60C 11/03*** (2006.01)   ***B60C 11/13*** (2006.01)
***B60C 11/12*** (2006.01)

(52) Cooperative Patent Classification (CPC):
**B60C 11/0309; B60C 11/1315;** B60C 11/1392;
B60C 2011/0348; B60C 2011/0353; B60C 2011/129;
B60C 2200/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **25.01.2024   JP 2024009638**

(71) Applicant: **SUMITOMO RUBBER INDUSTRIES, Ltd.
Kobe-shi, Hyogo 651-0072 (JP)**

(72) Inventor: **ITO, Shuhei
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **HEAVY DUTY TIRE**

(57)    A tire 2 includes a tread 4 including: circumferential grooves 10 including circumferential main grooves 14 and one or more circumferential narrow grooves 16; and transverse sipes 12 each connecting the circumferential main groove 14 and the circumferential narrow groove 16. Each circumferential narrow groove 16 includes a narrow groove portion 52, a wide portion 54, and an inflection portion 56. A pair of groove walls 16W of the circumferential narrow groove 16 come into contact with each other at the narrow groove portion 52 when the tread 4 comes into contact with a road surface and becomes deformed. A maximum width W2 of the wide portion 54 is wider than a minimum width W1 of the narrow groove portion 52. A contour of the inflection portion 56 is represented by an arc having a radius R1 larger than a length HW2 that is half the maximum width W2.

**Fig.5**

EP 4 592 094 A1

**Description**

BACKGROUND OF THE INVENTION

Field of the Invention

The present invention relates to a heavy duty tire.

Background Art

The tread of a tire has a plurality of circumferential grooves aligned in the axial direction. The plurality of circumferential grooves form a plurality of land portions in the tread.

Each land portion deforms when coming into contact with a road surface. The deformation of the land portion influences the rolling resistance of the tire. In consideration of influence on the environment, reduction of rolling resistance is strongly required for tires.

By providing the circumferential grooves with narrow groove portions having a narrow groove width, the land portions can support each other when the tread comes into contact with a road surface. Accordingly, deformation of the land portions is suppressed.

In order to reduce the rolling resistance of a tire, the adoption of circumferential grooves having narrow groove portions, that is, circumferential narrow grooves, has been considered (for example, Japanese Laid-Open Patent Publication No. 2017-094891).

A tire is obtained by vulcanizing a green tire in a mold. A tread ring of the mold forms the outer surface of a tread. In the case of forming circumferential narrow grooves on the tread, the tread ring is provided with projections that reflect the shapes of the circumferential narrow grooves. The projections protrude radially inward.

In the case where the mold is a segmented mold, the tread ring is composed of a plurality of segments aligned in the circumferential direction.

After the vulcanization step is completed, the tire is released from the mold. At this time, each segment is moved radially outward. Accordingly, the projections are pulled out from the tread.

The circumferential narrow grooves also influence, for example, running performance on a wet road surface (hereinafter also referred to as wet performance). Improvements to circumferential narrow grooves are being made while the influence on various performances is taken into consideration.

An object of the present invention is to provide a heavy duty tire that can suppress occurrence of tread chipping when released from a mold and a decrease in wet performance due to wear and can achieve reduction of rolling resistance.

SUMMARY OF THE INVENTION

A heavy duty tire according to the present invention includes a tread configured to come into contact with a road surface. The tread has a tread pattern including a plurality of circumferential grooves extending continuously in a circumferential direction and a plurality of transverse sipes aligned in the circumferential direction. The plurality of circumferential grooves include a plurality of circumferential main grooves and one or more circumferential narrow grooves. Each of the plurality of circumferential main grooves has a pair of groove walls which do not come into contact with each other even if the tread comes into contact with a road surface and becomes deformed. The plurality of circumferential main grooves demarcate a plurality of land portions aligned in an axial direction, in the tread. The plurality of land portions include two shoulder land portions each located on an outermost side in the axial direction and one or more main land portions located between the two shoulder land portions. Each of the one or more main land portions has the circumferential narrow groove. The circumferential narrow groove demarcates two main narrow land portions in the main land portion, thereby forming a plurality of main narrow land portions in the tread. Among the plurality of main narrow land portions, at least one main narrow land portion has the plurality of transverse sipes. The plurality of transverse sipes connect the circumferential main groove and the circumferential narrow groove. The circumferential narrow groove includes a narrow groove portion including a groove opening of the circumferential narrow groove, a wide portion including a groove bottom of the circumferential narrow groove, and an inflection portion connecting the narrow groove portion and the wide portion. A pair of groove walls of the circumferential narrow groove come into contact with each other at the narrow groove portion when the tread comes into contact with a road surface and becomes deformed. A maximum width $W2$ of the wide portion is wider than a minimum width $W1$ of the narrow groove portion. A contour of the inflection portion is represented by an arc having a radius $R1$ in a cross-section of the circumferential narrow groove along a plane perpendicular to a length direction of the circumferential narrow groove, and the radius $R1$ is larger than a length $HW2$ which is half the maximum width $W2$ of the wide portion.

According to the present invention, a heavy duty tire that can suppress occurrence of tread chipping when released from a mold and a decrease in wet performance due to wear and can achieve reduction of rolling resistance, is obtained.

BRIEF DESCRIPTION OF THE DRAWINGS

FIG. 1 is a development view showing a tread of a heavy duty tire according to one embodiment of the present invention;

FIG. 2 is a cross-sectional view of FIG. 1 taken along a line II-II;

FIG. 3 is an enlarged development view showing a part of FIG. 1;

FIG. 4 is a cross-sectional view of FIG. 3 taken along a line IV-IV;

FIG. 5 is a cross-sectional view of FIG. 3 taken along a line V-V;

FIG. 6 is a cross-sectional view illustrating a method for producing the tire;

FIG. 7 is a cross-sectional view showing a modification of a circumferential narrow groove; and

FIG. 8 is a cross-sectional view showing another modification of the circumferential narrow groove.

DETAILED DESCRIPTION

Hereinafter, the present invention will be described in detail based on a preferred embodiment with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

[Findings on Which Present Invention Is Based]

As described above, by providing the circumferential narrow grooves on the tread, deformation of the land portions is suppressed when the tread comes into contact with a road surface. By forming one or some of the circumferential grooves provided on the tread as circumferential narrow grooves, the rolling resistance of the tire can be reduced.

The circumferential narrow grooves are inferior to the circumferential main grooves in terms of drainage performance. In the case where one or some of the circumferential grooves provided on the tread are formed as circumferential narrow grooves, there is a concern that wet performance may be decreased due to wear of the tread.

Sipes that traverse a land portion (hereinafter referred to as transverse sipes) can function as edge components. By providing transverse sipes on a land portion, the tire can suppress a decrease in wet performance.

If a wide portion having a groove width wider than the groove width of a narrow groove portion is provided on the groove bottom side of each circumferential narrow groove, the wide portion can contribute to ensuring the groove volume. When the wide portion is exposed, the tire can suppress a decrease in wet performance.

As described above, in the case of forming circumferential narrow grooves on the tread, a tread ring of a mold is provided with projections that reflect the shapes of the circumferential narrow grooves.

In the case of providing a wide portion in each circumferential narrow groove, the shape of the wide portion is reflected in a distal end portion of the projection. When the vulcanization step is completed and the tire is released from the mold, the distal end portion passes through the narrow groove portion having a narrower groove width than the wide portion. Pulling out the projection is accompanied by deformation of the land portion.

A blade is used to form a sipe on the tread. For example, in the case of forming a tread pattern in which transverse sipes are connected to a circumferential narrow groove, a mold in which blades for the transverse sipes are connected to a projection for the circumferential narrow groove, is used.

In the case of producing a tire using such a mold, when the projection and the blades are pulled out from the tread, a connection portion between the projection and each blade tends to get caught at a part of a land portion. In the case where the mold is a segmented mold, the projection and each blade are pulled out more obliquely with respect to the projection direction thereof at a position closer to an end portion in the circumferential direction of a segment. Stress is likely to be concentrated on a land portion located close to the connection portion. Depending on the degree of stress concentration, there is a concern that chipping may occur at the land portion, that is, the tread.

Therefore, in order to obtain a tire that can suppress occurrence of tread chipping when released from a mold and a decrease in wet performance due to wear and can achieve reduction of rolling resistance, the present inventor has conducted a thorough study for the shapes of the circumferential narrow grooves, and thus has completed the invention described below.

[Outline of Embodiment of Present Invention]

The present invention is directed to a heavy duty tire including a tread configured to come into contact with a road surface, wherein: the tread has a tread pattern including a plurality of circumferential grooves extending continuously in a circumferential direction and a plurality of transverse sipes aligned in the circumferential direction; the plurality of circumferential grooves include a plurality of circumferential main grooves and one or more circumferential narrow grooves; each of the plurality of circumferential main grooves has a pair of groove walls which do not come into contact with each other even if the tread comes into contact with a road surface and becomes deformed; the plurality of circumferential main grooves demarcate a plurality of land portions aligned in an axial direction, in the tread; the plurality of land portions include two shoulder land portions each located on an outermost side in the axial direction and one or more main land portions located between the two shoulder land portions; each of the one or more main land portions has the circumferential narrow groove; the circumferential narrow groove demarcates two main narrow land portions in the main land portion, thereby forming a plurality of main narrow land portions in the tread; among the plurality of main narrow land portions, at least one main narrow land portion has the plurality of transverse sipes; the plurality of transverse sipes connect the circumferential main groove and the circumferential narrow groove; the circumferential narrow groove includes a narrow groove portion including a groove opening of the circumferential narrow groove, a wide portion including a groove bottom of the circumferential narrow groove, and an inflection portion connecting the narrow groove portion and the wide portion; a pair of groove walls of the circumferential narrow groove come into contact with each other at the narrow groove portion when the tread comes into contact with a road surface and becomes deformed; a maximum width W2 of the wide portion is wider than a minimum width W1 of the narrow groove portion; a contour of the inflection portion is represented by an arc having a radius R1 in a cross-section of the circumferential narrow groove along a plane perpendicular to a length direction of the circumferential narrow groove; and the radius R1 is larger than a length HW2 which is half the maximum width W2 of the wide portion.

The heavy duty tire of the present invention can suppress tread chipping when released from a mold and a decrease in wet performance due to wear, and can achieve reduction of rolling resistance. The mechanism by which this effect is achieved has not been clarified, but is inferred as follows.

When the tread comes into contact with a road surface and becomes deformed, the pair of groove walls of the circumferential narrow groove come into contact with each other at the narrow groove portion. The two land portions located on both sides of the circumferential narrow groove support each other, so that deformation of the land portions is suppressed. The tire can reduce rolling resistance.

Each transverse sipe functions as an edge component. The tire can maintain good wet performance even if the tread becomes worn.

The wide portion provided on the groove bottom side of the circumferential narrow groove can contribute to ensuring the groove volume. Even if the tread becomes worn and each transverse sipe disappears, the exposed wide portion can contribute to maintaining wet performance.

The tire can maintain good wet performance from a new state until replacement of the tire becomes necessary.

The tire can suppress a decrease in wet performance due to wear, and can achieve reduction of rolling resistance.

The mold for the tire includes a projection for forming the circumferential narrow grooves and blades for forming the transverse sipes, and a distal end portion of the projection forms the wide portion of the circumferential narrow groove.

After a vulcanization step is completed, the tire is released from the mold. At this time, the projection and each blade are pulled out from the tread.

In the tire, the contour of a portion between the narrow groove portion and the wide portion, that is, the inflection portion, is represented by the arc having a large radius R1. The shape of the inflection portion is formed such that the groove width thereof gradually increases from the narrow groove portion toward the wide portion. When the projection and each blade are pulled out from the tread, the land portions are less likely to get caught at a connection portion between the projection and the blade. Concentration of stress on a connection portion between the circumferential narrow groove and each transverse sipe is suppressed. The tire can suppress occurrence of tread chipping when the tire is released from the mold.

The tire can suppress occurrence of tread chipping when releasing the tire from the mold and a decrease in wet performance due to wear, and can achieve reduction of rolling resistance.

Preferably, a ratio W1/W2 of the minimum width W1 of the narrow groove portion to the maximum width W2 of the wide portion is not less than 0.15 and not greater than 0.35.

In this case, the tire can effectively suppress occurrence of tread chipping and a decrease in wet performance due to wear.

Preferably, the minimum width W1 of the narrow groove portion is not greater than 2.5 mm.

In this case, the tire can effectively reduce rolling resistance.

Preferably, a contour of the wide portion is represented by an arc having a radius R2 in the cross-section of the circumferential narrow groove along the plane perpendicular to the length direction of the circumferential narrow groove, and a ratio R1/R2 of the radius R1 of the arc representing the contour of the inflection portion to the radius R2 of the arc representing the contour of the wide portion is not less than 1.5.

In this case, the tire can effectively suppress occurrence of tread chipping.

Preferably, a ratio D2/D1 of a groove depth D2 of the narrow groove portion to a groove depth D1 of the circumferential narrow groove is not less than 0.25 and not greater than 0.70.

In this case, the tire can effectively suppress occurrence of tread chipping, and can effectively reduce rolling resistance.

Preferably, a groove depth D3 from the groove opening of the circumferential narrow groove to a position at which the wide portion has the maximum width W2, a groove depth D4 of the transverse sipe, and a groove depth D2 of the narrow groove portion satisfy the following formula,

$$\text{formula: } D2 \leq D4 \leq D3.$$

In this case, the tire can effectively suppress occurrence of tread chipping and a decrease in wet performance due to wear, and can effectively reduce rolling resistance.

Preferably, an angle of the transverse sipe with respect to the axial direction is not less than -35 degrees and not greater than 35 degrees.

In this case, the tire can effectively suppress occurrence of tread chipping.

Preferably, the tread pattern includes a plurality of pitch patterns aligned in the circumferential direction and having the same length in the circumferential direction, the plurality of pitch patterns are the same as each other, and a ratio L/L 1 of a length L in the circumferential direction of the pitch pattern to an interval L1 between the two transverse sipes aligned in the circumferential direction is not less than 1.0 and not greater than 3.5.

In this case, the tire can effectively suppress occurrence of tread chipping and a decrease in wet performance due to wear, and can effectively reduce rolling resistance.

[Details of Embodiment of Present Invention]

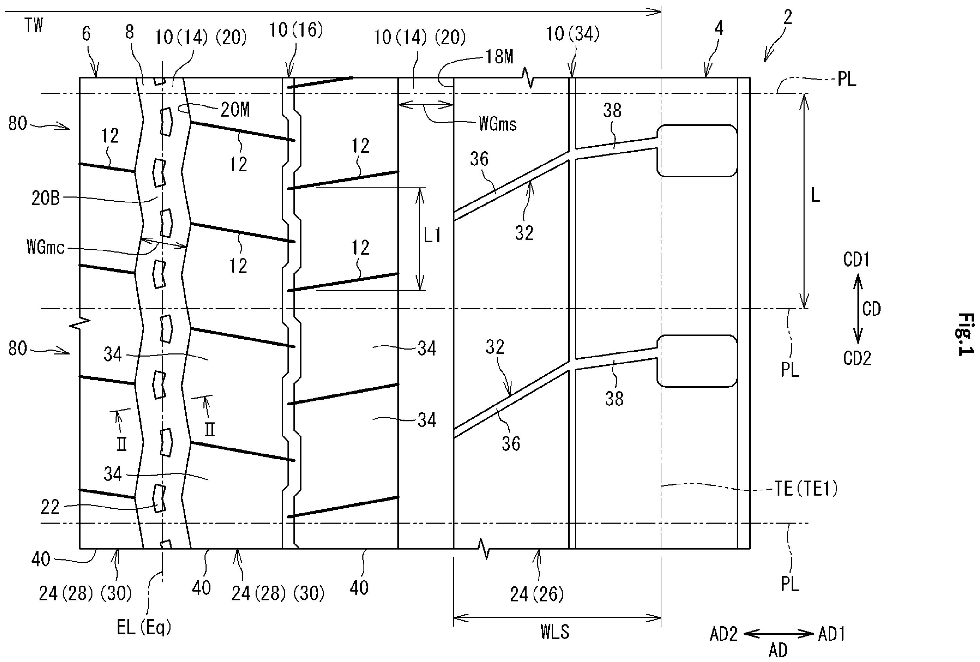

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire. The tread 4 comes into contact with a road surface. The tire 2 includes the tread 4 which comes into contact with a road surface.

In FIG. 1, a direction indicated by a double-headed arrow AD is the axial direction of the tire 2. The axial direction of the tire 2 means a direction parallel to the rotation axis (not shown) of the tire 2. A direction indicated by a double-headed arrow CD is the circumferential direction of the tire 2. A direction perpendicular to the surface of the drawing sheet of FIG. 1 is the radial direction of the tire 2. In FIG. 1, an alternate long and short dash line EL extending in the circumferential direction represents the equator plane of the tire 2.

In FIG. 1, a side indicated by an arrow AD 1 is a first axial direction side of the tire 2, and a side indicated by an arrow AD2 is a second axial direction side of the tire 2. A side toward the equator plane EL in the axial direction is an axially inner side, and a side toward an end of a tread surface described later is an axially outer side.

In FIG. 1, a side indicated by an arrow CD1 is a first circumferential direction side of the tire 2, and a side indicated by an arrow CD2 is a second circumferential direction side of the tire 2.

FIG. 1 shows a tread pattern formed on the tread 4. The tread pattern of the present invention will be described with this tread pattern as an example. In the present invention, the internal structure of the tire 2 is not limited to any particular internal structure. Although not described in detail, the tire 2 has a general internal structure as the internal structure of a heavy duty tire.

The tread pattern in FIG. 1 is the tread pattern of a new tire 2, that is, a tread 4 that has not been worn.

The tread 4 is located on the radially outer side in the tire 2 and extends in the circumferential direction. The outer circumferential surface of the tread 4 is a tread surface 6. The tread 4 has the tread surface 6. The tire 2 comes into contact with a road surface at the tread surface 6.

The tread 4 is formed from a crosslinked rubber. Although not described in detail, a portion, of the tread 4, including the tread surface 6 is formed from a crosslinked rubber for which wear resistance and grip performance are taken into consideration. The other portion is formed from a crosslinked rubber that has low heat generation properties.

Grooves 8 are formed on the tread 4. Accordingly, a tread pattern is formed. The tread 4 has the tread pattern.

The point of intersection of the tread surface 6 and the equator plane EL corresponds to an equator Eq. In the case where the groove 8 is located on the equator plane EL, the equator Eq is specified on the basis of a virtual tread surface obtained on the assumption that the groove 8 is not provided on the equator plane EL. The equator Eq is a radially outer end of the tire 2.

A solid line indicated by reference character TE is an end of the tread surface 6.

In the present invention, when the end TE of the tread surface 6 cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is represented as the end of the tread surface.

In the tread surface 6 shown in FIG. 1, an end TE of the tread surface 6 located on the first axial direction AD1 side is a first end TE1. Although not shown, an end TE located on the second axial direction AD2 side is a second end TE2.

A length indicated by a double-headed arrow TW is the width of the tread surface 6. The width TW of the tread surface 6 is the distance in the axial direction from the first end TE1 to the second end TE2 of the tread surface 6. The width TW of the tread surface 6 is represented as a length measured along the tread surface 6.

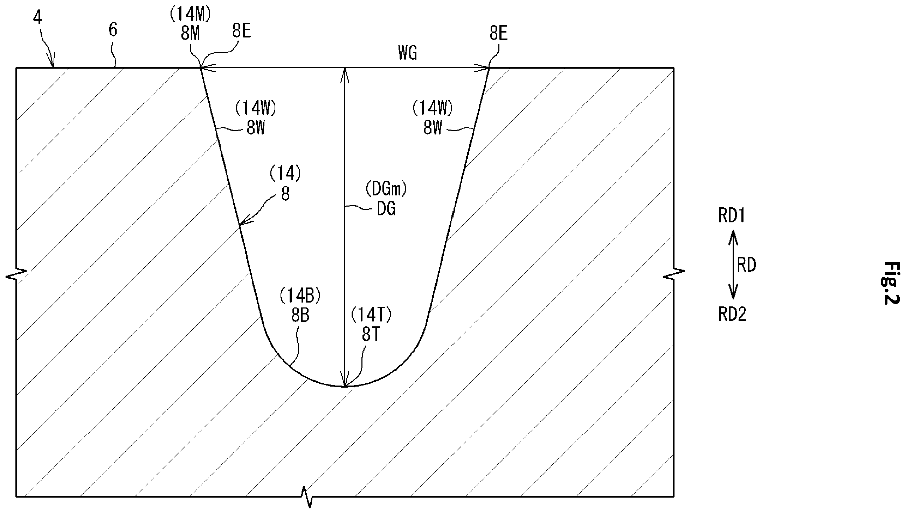

FIG. 2 is a cross-sectional view of FIG. 1 taken along a line II-II. FIG. 2 shows a cross-section of the groove 8, specifically, a circumferential main groove (more specifically, crown circumferential main groove) described later. The main configuration of the groove 8 will be described with reference to FIG. 2.

In FIG. 2, a direction indicated by a double-headed arrow RD is the radial direction of the tire 2. A side indicated by an arrow RD1 is the radially outer side of the tire 2, and a side indicated by an arrow RD2 is the radially inner side of the tire 2. In the present invention, the cross-section of the groove 8 is represented as a cross-section along a plane perpendicular to the length direction of the groove 8.

The groove 8 has a pair of groove walls 8W which extend between a groove opening 8M and a groove bottom 8T. A first groove wall 8W and a second groove wall 8W which are the pair of groove walls 8W face each other. The groove width of the groove 8 is represented as the distance between the first groove wall 8W and the second groove wall 8W facing each other, that is, the inter-groove wall distance.

In FIG. 2, a length indicated by a double-headed arrow WG is the groove width of the groove 8 at the groove opening 8M. The groove width WG is represented as the shortest distance between a pair of edges 8E forming the groove opening 8M. In the case where a portion of the groove 8 at the groove opening 8M is processed in a tapered manner, the groove width at the groove opening 8M of the groove 8 is represented on the basis of virtual edges obtained on the assumption that the portion of the groove 8 at the groove opening 8M is not processed in a tapered manner.

A length indicated by a double-headed arrow DG is the groove depth of the groove 8. The groove depth DG of the groove 8 is represented as the shortest distance from a line segment connecting the left and right edges 8E to the groove bottom 8T of the groove 8.

The position, the groove width WG, and the groove depth DG of the groove 8 are determined as appropriate according to the specifications of the tire 2.

The groove bottom 8T is the deepest position in the cross-section of the groove 8. The distance from the line segment connecting the left and right edges 8E forming the groove opening 8M, to the groove 8, is measured along a normal line of this line segment. A position at which the distance from the line segment to the groove 8 is the largest is the groove bottom 8T.

A portion, of the groove 8, including the groove bottom 8T is also referred to as bottom surface 8B. The bottom surface 8B shown in FIG. 2 is a curved surface. The bottom surface 8B may be composed of a flat surface. In this case, the width center of the flat surface constituting the bottom surface 8B is used as the groove bottom 8T.

The grooves 8 each having a groove width WG of less than 1.0 mm at the groove opening 8M are referred to as sipes. The grooves 8 other than sipes are also referred to as ordinary grooves, and each have a groove width WG of not less than 1.0 mm at the groove opening 8M.

A sipe may include a portion (hereinafter referred to as ordinary groove equivalent portion) having a groove width of not less than 1.0 mm, between the groove opening 8M and the groove bottom 8T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 8M and the groove bottom 8T thereof. In this case, the ordinary groove becomes a sipe when the tread 4 becomes worn and the sipe equivalent portion is exposed.

An ordinary groove that has a narrow groove width and whose pair of groove walls 8W can come into contact with each other when the tread 4 comes into contact with a road surface and becomes deformed, is also referred to as narrow groove. The narrow groove has a pair of groove walls 8W which come into contact with each other when the tread 4 comes into contact with a road surface and becomes deformed. On the other hand, an ordinary groove that has a wide groove width and whose pair of groove walls 8W do not come into contact with each other even when the tread 4 comes into contact with a road surface and becomes deformed, is also referred to as main groove. The main groove has a pair of groove walls 8W which do not come into contact with each other even when the tread 4 comes into contact with a road surface and becomes deformed.

A plurality of circumferential grooves 10 and a plurality of transverse sipes 12 are formed on the tread 4. Each of the plurality of circumferential grooves 10 extends continuously in the circumferential direction. Each circumferential groove 10 is the above-described ordinary groove. The plurality of transverse sipes 12 are aligned in the circumferential direction. Each of the plurality of transverse sipes 12 traverses a main narrow land portion described later. Each transverse sipe 12 is the above-described sipe.

The tread pattern of the tire 2 includes the plurality of circumferential grooves 10 and the plurality of transverse sipes 12.

The plurality of circumferential grooves 10 include a plurality of circumferential main grooves 14 and one or more circumferential narrow grooves 16. On the tread 4 shown in FIG. 1, three circumferential main grooves 14 and two circumferential narrow grooves 16 are formed. On the tread 4, four or more circumferential main grooves 14 and three or more circumferential narrow grooves 16 may be formed.

As shown in FIG. 2, each circumferential main groove 14 has a pair of groove walls 14W which extend between a groove opening 14M and a groove bottom 14T. A portion, of the circumferential main groove 14, including the groove bottom 14T is also referred to as bottom surface 14B.

Each circumferential main groove 14 is the above-described main groove. The pair of groove walls 14W of the circumferential main groove 14 do not come into contact with each other even when the tread 4 comes into contact with a road surface and becomes deformed. In other words, the circumferential main groove 14 has a pair of groove walls 14W which do not come into contact with each other even when the tread 4 comes into contact with a road surface and becomes deformed.

In FIG. 2, a length indicated by a double-headed arrow DGm is the groove depth of the circumferential main groove 14.

The groove depth DGm of the circumferential main groove 14 is, for example, not less than 10 mm and not greater than 21 mm. From the viewpoint that the tire 2 can exhibit good wet performance, the groove depth DGm is preferably not less than 13 mm and not greater than 18 mm. As described later, the groove depth of each circumferential narrow groove 16 is equal to the groove depth DGm of each circumferential main groove 14, or shallower than the groove depth DGm of each circumferential main groove 14.

As described above, the three circumferential main grooves 14 are formed on the tread 4. Among the three circumferential main grooves 14, the circumferential main groove 14 located on each outermost side in the axial direction is a shoulder circumferential main groove 18. The circumferential main groove 14 located on the innermost side in the axial direction, in other words, the circumferential main groove 14 located on the equator plane EL, or the circumferential main groove 14 closest to the equator plane EL, is a crown circumferential main groove 20. On the tread 4 shown in FIG. 1, among the three circumferential main grooves 14, the circumferential main groove 14 located on the innermost side in the axial direction is located on the equator plane EL. The circumferential main groove 14 located on the equator plane EL is the crown circumferential main groove 20.

The tread 4 has such a crown circumferential main groove 20 and a pair of such shoulder circumferential main grooves 18. Although not shown, a circumferential main groove 14 may be provided between the crown circumferential main groove 20 and each shoulder circumferential main groove 18. In this case, the circumferential main groove 14 located between the crown circumferential main groove 20 and each shoulder circumferential main groove 18 is also referred to as middle circumferential main groove.

In FIG. 1, a length indicated by a double-headed arrow WGmc is the groove width at a groove opening 20M of the crown circumferential main groove 20. A length indicated by a double-headed arrow WGms is the groove width at a groove opening 18M of the shoulder circumferential main groove 18.

The ratio (WGmc/TW) of the groove width WGmc of the crown circumferential main groove 20 to the width TW of the tread surface 6 exceeds 2.0%. Specifically, the ratio (WGmc/TW) is preferably not less than 4.0% and not greater than 10%.

As shown in FIG. 1, the groove width WGms of the shoulder circumferential main groove 18 is wider than the groove width WGmc of the crown circumferential main groove 20. The ratio (WGms/TW) of the groove width WGms of the shoulder circumferential main groove 18 to the width TW of the tread surface 6 is preferably not less than 5.0% and not greater than 11%.

As shown in FIG. 1, a projection 22 is provided on a bottom surface 20B of the crown circumferential main groove 20 so as to project from the bottom surface 20B. A plurality of projections 22 are arranged so as to be spaced at predetermined intervals in the circumferential direction. The projections 22 prevent stones from being trapped in the crown circumferential main groove 20.

The plurality of circumferential main grooves 14 are formed on the tread 4 of the tire 2, so that a plurality of land portions 24 are formed so as to be aligned in the axial direction. The plurality of circumferential main grooves 14 demarcate the plurality of land portions 24 in the tread 4. On the tread 4 shown in FIG. 1, the three circumferential main grooves 14 are formed, so that four land portions 24 are formed therein.

Among the plurality of land portions 24, the land portion 24 located on each outermost side in the axial direction is a shoulder land portion 26. The shoulder land portion 26 includes the end TE of the tread surface 6. The land portion 24 located on the innermost side in the axial direction, in other words, the land portion 24 located on the equator plane EL, or the land portion 24 closest to the equator plane EL, is a crown land portion 28. In the tread 4 shown in FIG. 1, among the four land portions 24, the land portion 24 located on the innermost side in the axial direction is closest to the equator plane EL. The land portion 24 closest to the equator plane EL is the crown land portion 28.

The tread 4 includes a pair of such crown land portions 28 and a pair of such shoulder land portions 26. Although not shown, a land portion 24 may be provided between each crown land portion 28 and each shoulder land portion 26. In this case, the land portion 24 located between each crown land portion 28 and each shoulder land portion 26 is also referred to as middle land portion.

In the present invention, the land portion 24 located between the two shoulder land portions 26 is a main land portion 30.

In the tread 4 shown in FIG. 1, the land portions 24 located between the two shoulder land portions 26 are the crown land portions 28. Each crown land portion 28 of the tire 2 is the main land portion 30.

The plurality of land portions 24 are formed in the tread 4 of the tire 2, and the plurality of land portions 24 include two shoulder land portions 26 each located on the outermost side in the axial direction and one or more main land portions 30 located between the two shoulder land portions 26.

In the tread 4 shown in FIG. 1, two crown land portions 28 are located between the two shoulder land portions 26. The plurality of land portions 24 formed in the tread 4 include two shoulder land portions 26 and two main land portions 30.

In FIG. 1, a length indicated by a double-headed arrow WLS is the width of the shoulder land portion 26. In the tire 2, in the case where the width of the land portion 24 varies in the circumferential direction, the width of the land portion 24 is represented as the maximum width.

The ratio (WLS/TW) of the maximum width WLS of the shoulder land portion 26 of the tire 2 to the width TW of the tread surface 6 is not less than 15% and not greater than 25%.

A lateral shallow groove 32 and a longitudinal shallow groove 34 are formed on each shoulder land portion 26. The shoulder land portion 26 may be composed of a plain land portion having no groove 8 formed thereon. The above-described sipes and narrow grooves may be formed on the shoulder land portion 26.

On the shoulder land portion 26 shown in FIG. 1, a plurality of lateral shallow grooves 32 are formed. The plurality of lateral shallow grooves 32 are aligned in the circumferential direction. The tread pattern of the tire 2 can include the plurality of lateral shallow grooves 32 aligned in the circumferential direction.

Each of the plurality of lateral shallow grooves 32 connects the shoulder circumferential main groove 18 and the end TE of the tread surface 6. As shown in FIG. 1, each lateral shallow groove 32 is inclined with respect to the axial direction. The axially inner end of the lateral shallow groove 32 is located on the second circumferential direction side with respect to the axially outer end thereof. Although not described in detail, the lateral shallow groove 32 has a groove width substantially equal to that of the above-described narrow groove, but is a groove shallower than the narrow groove.

As described above, the longitudinal shallow groove 34 is formed on the shoulder land portion 26. The longitudinal shallow groove 34 extends continuously in the circumferential direction. The longitudinal shallow groove 34 is included in the circumferential grooves 10. Although not described in detail, the longitudinal shallow groove 34 has a groove width substantially equal to that of the above-described narrow groove, but is a groove shallower than the narrow groove. The longitudinal shallow groove 34 is neither the circumferential main groove 14 nor the circumferential narrow groove 16.

The longitudinal shallow groove 34 intersects the plurality of lateral shallow grooves 32 aligned in the circumferential direction. The longitudinal shallow groove 34 defines an inner lateral shallow groove 36 and an outer lateral shallow groove 38 in each lateral shallow groove 32. As shown in FIG. 1, the degree of inclination of the outer lateral shallow groove 38 with respect to the axial direction is lower than the degree of inclination of the inner lateral shallow groove 36 with respect to the axial direction.

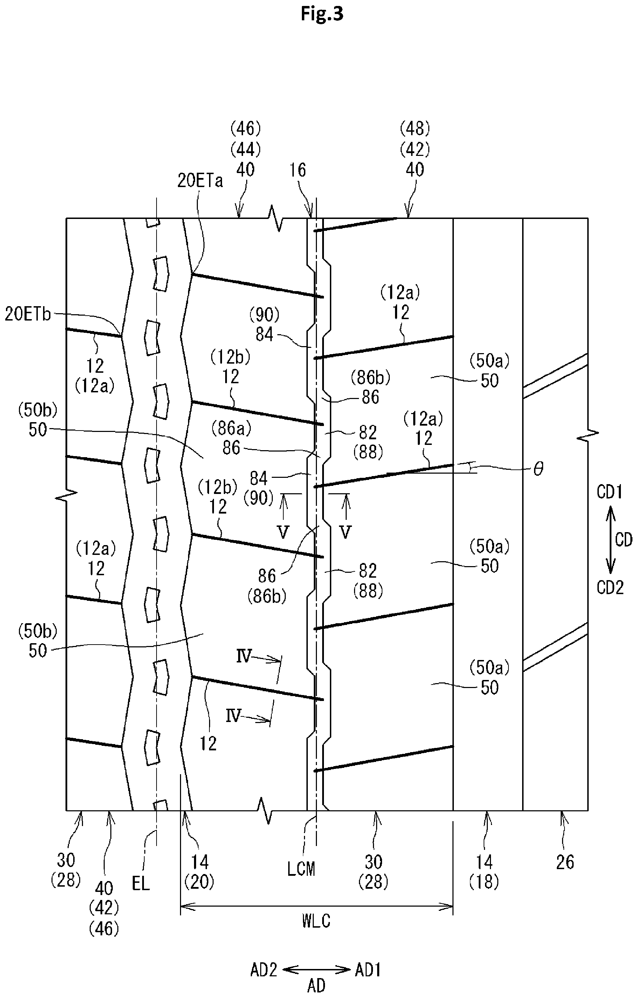

FIG. 3 shows a part of the tread surface 6 shown in FIG. 1. FIG. 3 shows the main land portion 30 located between the equator plane EL and the first end TE1 of the tread surface 6 (i.e., the main land portion 30 located on the first end TE1 side).

In FIG. 3, a length indicated by a double-headed arrow WLC is the maximum width of the crown land portion 28 as the main land portion 30. The ratio (WLC/TW) of the maximum width WLC of the crown land portion 28 of the tire 2 to the width TW of the tread surface 6 is not less than 17% and not greater than 27%.

As described above, the plurality of circumferential grooves 10 formed on the tread 4 of the tire 2 include one or more circumferential narrow grooves 16. The plurality of land portions 24 formed in the tread 4 include one or more main land portions 30. One circumferential narrow groove 16 is formed on each of the one or more main land portions 30. Each of the one or more main land portions 30 has the circumferential narrow groove 16. Accordingly, two main narrow land portions 40 are formed in each main land portion 30.

The circumferential narrow groove 16 demarcates the two main narrow land portions 40 in each main land portion 30, whereby a plurality of main narrow land portions 40 are formed in the tread 4.

As described above, the two circumferential narrow grooves 16 are formed on the tread 4 shown in FIG. 1. The two circumferential narrow grooves 16 are formed on the two main land portions 30 formed in the tread 4, respectively.

In FIG. 3, an alternate long and short dash line LCM is a maximum width center line of the crown land portion 28 as the main land portion 30. As shown in FIG. 3, the circumferential narrow groove 16 is located on the maximum width center line LCM of the crown land portion 28. In other words, the circumferential narrow groove 16 is located so as to overlap the maximum width center line LCM in the radial direction.

In the tire 2, the two main narrow land portions 40 are formed in each of the two main land portions 30 of the tread 4. In the tread 4, four main narrow land portions 40 aligned in the axial direction are formed between the two shoulder land portions 26.

Of the two main narrow land portions 40 formed in each main land portion 30, the main narrow land portion 40 located on the first end TE1 side of the tread surface 6 is referred to as first main narrow land portion 42, and the main narrow land portion 40 located on the second end TE2 side of the tread surface 6 is referred to as second main narrow land portion 44.

Of the two main narrow land portions 40 formed in each main land portion 30, the main narrow land portion 40 located on the equator plane EL side is referred to as inner main narrow land portion 46, and the main narrow land portion 40 located on the end TE side of the tread surface 6 is referred to as outer main narrow land portion 48.

In the main land portion 30 located on the first end TE1 side, the first main narrow land portion 42 is the outer main narrow land portion 48, and the second main narrow land portion 44 is the inner main narrow land portion 46. Although not shown, in the main land portion 30 located on the second end TE2 side, the first main narrow land portion 42 is the inner main narrow land portion 46, and the second main narrow land portion 44 is the outer main narrow land portion 48.

As described above, the tread pattern of the tire 2 includes the plurality of transverse sipes 12.

In the tread 4 shown in FIG. 1, a plurality of transverse sipes 12 are formed at equal intervals on each of the four main narrow land portions 40 formed in the tread 4. The interval between two transverse sipes 12 adjacent to each other on one main narrow land portion 40 is the same as the interval between two transverse sipes 12 adjacent to each other on another main narrow land portion 40.

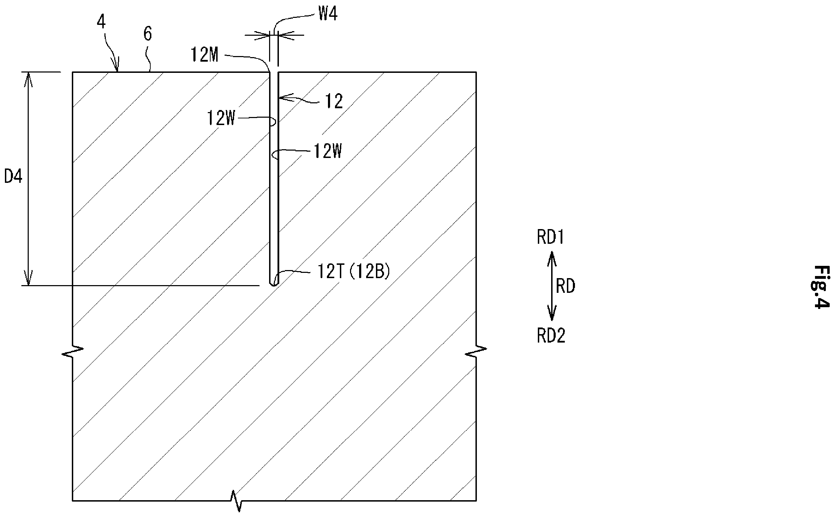

FIG. 4 shows a cross-section of the transverse sipe 12 taken along a line IV-IV in FIG. 3.

The transverse sipe 12 extends straight in the depth direction thereof. The transverse sipe 12 has a pair of wall surfaces 12W which extend between a groove opening 12M and a groove bottom 12T.

In FIG. 4, a length indicated by a double-headed arrow W4 is the groove width at the groove opening 12M of the transverse sipe 12. The transverse sipe 12 has a uniform groove width W4 except for a portion at a bottom surface 12B including the groove bottom 12T.

The groove width W4 of the transverse sipe 12 is less than 1.0 mm. When a load acts on the tread 4 and the tread 4 becomes deformed, the wall surfaces 12W of the transverse sipe 12 come into contact with and support each other.

A length indicated by a double-headed arrow D4 is the groove depth of the transverse sipe 12. The groove depth D4 of the transverse sipe 12 is shallower than the groove depth of the circumferential narrow groove 16. When the tread 4 becomes worn, each transverse sipe 12 disappears before each circumferential narrow groove 16.

In the tire 2, the circumferential main grooves 14 and the circumferential narrow grooves 16 are arranged alternately in the axial direction between the two shoulder land portions 26. Each main narrow land portion 40 is located between the circumferential main groove 14 and the circumferential narrow groove 16. The plurality of transverse sipes 12 formed on each main narrow land portion 40 connect the circumferential main groove 14 and the circumferential narrow groove 16. The transverse sipes 12 traverse the main narrow land portion 40.

In the tire 2, it is sufficient that among the plurality of main narrow land portions 40 formed in the tread 4, at least one main narrow land portion 40 includes a plurality of transverse sipes 12. Among the four main narrow land portions 40 formed in the tread 4, one main narrow land portion 40 may include a plurality of transverse sipes 12, two main narrow land portions 40 may each include a plurality of transverse sipes 12, or three main narrow land portions 40 may each include a plurality of transverse sipes 12.

As described above, each transverse sipe 12 traverses the main narrow land portion 40. Each transverse sipe 12 functions as an edge component. From the viewpoint of exhibiting good wet performance, it is preferable that all of the main narrow land portions 40 formed in the tread 4 each include a plurality of transverse sipes 12.

In the tire 2, by forming the plurality of transverse sipes 12 on each main narrow land portion 40, a plurality of main blocks 50 are formed in each main narrow land portion 40. The plurality of transverse sipes 12 demarcate the plurality of main blocks 50 in the main narrow land portion 40. The plurality of main blocks 50 are aligned in the circumferential direction.

As shown in FIG. 3, the transverse sipes 12 formed on the first main narrow land portion 42 (hereinafter referred to as first transverse sipes 12a) and the transverse sipes 12 formed on the second main narrow land portion 44 (hereinafter referred to as second transverse sipes 12b) are arranged alternately in the circumferential direction. The main blocks 50 formed in the first main narrow land portion 42 (hereinafter referred to as first main blocks 50a) and the main blocks 50 formed in the second main narrow land portion 44 (hereinafter referred to as second main blocks 50b) are arranged alternately in the circumferential direction.

As described above, each main land portion 30 of the tire 2 includes the circumferential narrow groove 16.

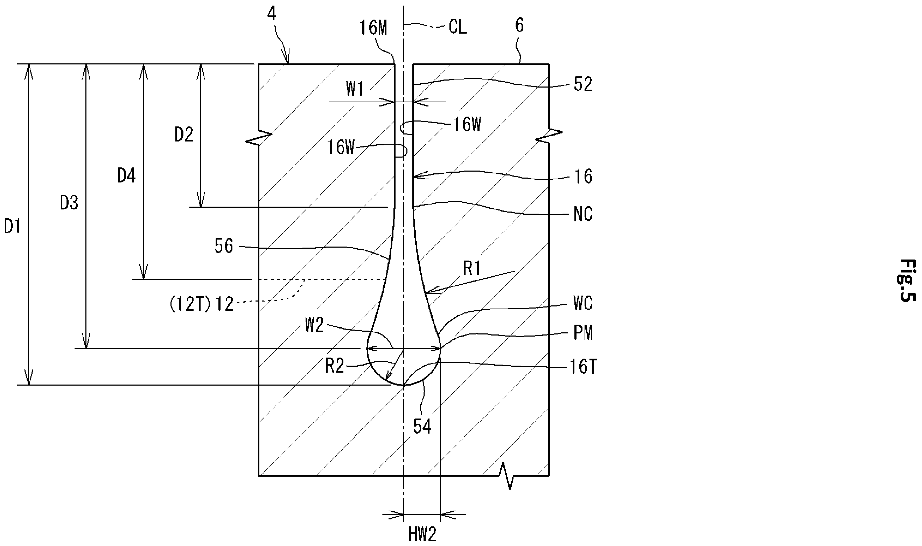

FIG. 5 shows a cross-section of the circumferential narrow groove 16 taken along a line V-V in FIG. 3. FIG. 5 shows a cross-section of the circumferential narrow groove 16 along a plane perpendicular to the length direction of the circumferential narrow groove 16. In FIG. 5, a length indicated by a double-headed arrow D1 is the groove depth of the circumferential narrow groove 16.

The circumferential narrow groove 16 has a pair of groove walls 16W which extend between a groove opening 16M and a groove bottom 16T. In FIG. 5, an alternate long and short dash line CL is a center line of the circumferential narrow groove 16. The circumferential narrow groove 16 has a cross-sectional shape that is symmetrical with respect to the center line CL. The center line CL passes through the groove bottom 16T.

The circumferential narrow groove 16 includes a narrow groove portion 52, a wide portion 54, and an inflection portion 56 as shape elements.

The narrow groove portion 52 includes the groove opening 16M of the circumferential narrow groove 16. In FIG. 5, a length indicated by a double-headed arrow W1 is the minimum width of the narrow groove portion 52. In the circumferential narrow groove 16 shown in FIG. 5, the narrow groove portion 52 extends straight from the groove opening 16M in the depth direction of the circumferential narrow groove 16. In the cross-section of the circumferential narrow groove 16, the contour of the narrow groove portion 52 is represented by a straight line. The narrow groove portion 52 has a uniform groove width W1 as a whole. The minimum width center line of the narrow groove portion 52 coincides with the above-described center line CL. A length indicated by a double-headed arrow D2 is the groove depth of the narrow groove portion 52.

The wide portion 54 is located radially inward of the narrow groove portion 52. The wide portion 54 includes the groove bottom 16T of the circumferential narrow groove 16. In FIG. 5, a length indicated by a double-headed arrow W2 is the maximum width of the wide portion 54. The maximum width center line of the wide portion 54 coincides with the above-described center line CL.

In FIG. 5, a position indicated by reference character PM is a position at which the wide portion 54 has the maximum width W2 (hereinafter referred to as maximum width position PM). A portion of the circumferential narrow groove 16 except for the narrow groove portion 52, that is, a radially inner portion of the circumferential narrow groove 16, is tapered outward from the maximum width position PM and is tapered inward from the maximum width position PM. A length indicated by a double-headed arrow D3 is the groove depth from the groove opening 16M of the circumferential narrow groove 16 to the maximum width position PM.

In FIG. 5, a length indicated by a double-headed arrow HW2 is the length from the center line CL to the maximum width position PM. The length HW2 is a length that is half the maximum width W2. In the cross-section of the circumferential narrow groove 16, the contour of the wide portion 54 is represented by an arc having a radius R2. The length HW2, which is half the maximum width W2, is equal to the radius R2 of the arc representing the contour of the wide portion 54.

The inflection portion 56 is located between the narrow groove portion 52 and the wide portion 54 in the radial direction. The inflection portion 56 connects the narrow groove portion 52 and the wide portion 54. In the cross-section of the circumferential narrow groove 16, the contour of the inflection portion 56 is represented by an arc. In FIG. 5, an arrow R1 indicates the radius of the arc representing the contour of the inflection portion 56.

In FIG. 5, a position indicated by reference character NC is the boundary between the narrow groove portion 52 and the inflection portion 56 (hereinafter referred to as first boundary). The first boundary NC is the inner end of the narrow groove portion 52 and the outer end of the inflection portion 56.

In FIG. 5, a position indicated by reference character WC is the boundary between the wide portion 54 and the inflection portion 56 (hereinafter referred to as second boundary). The second boundary WC is the outer end of the wide portion 54 and the inner end of the inflection portion 56.

In the circumferential narrow groove 16, a portion from the groove opening 16M to the first boundary NC is the narrow groove portion 52. A portion from the first boundary NC to the second boundary WC is the inflection portion 56. A portion from the second boundary WC to the groove bottom 16T is the wide portion 54. The straight line representing the contour of the narrow groove portion 52 and the arc representing the contour of the inflection portion 56 are tangent to each other at the first boundary NC. The arc representing the contour of the inflection portion 56 and the arc representing the contour of the wide portion 54 are tangent to each other at the second boundary WC.

In the tire 2, the maximum width W2 of the wide portion 54 is wider than the minimum width W1 of the narrow groove portion 52. The groove width of the circumferential narrow groove 16 indicates the minimum width W1 in the narrow groove portion 52, and indicates the maximum width W2 in the wide portion 54. The circumferential narrow groove 16 is the above-described narrow groove.

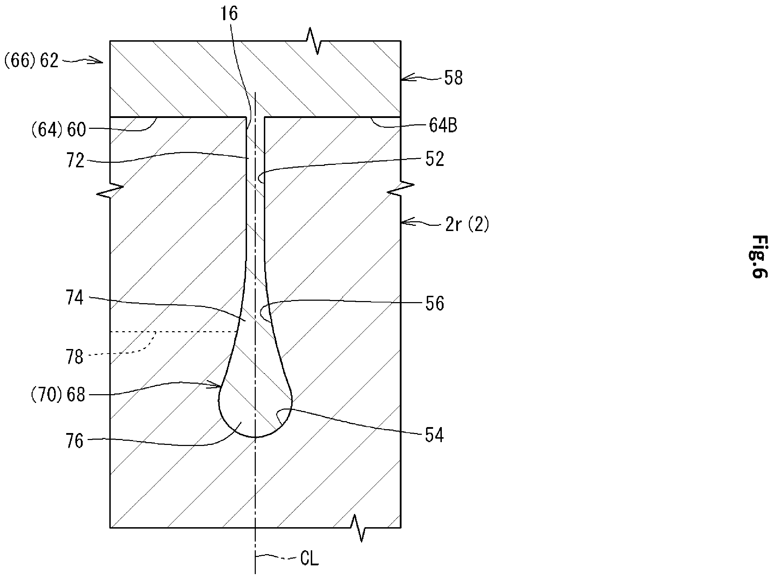

A method for producing the tire 2 will be described with reference to FIG. 6. In the method for producing the tire 2, components such as the tread 4 are shaped and combined to prepare a green tire 2r (unvulcanized tire) for the tire 2. The green tire 2r is placed in a mold 58. The green tire 2r is pressurized and heated in the mold 58 to obtain the tire 2. The method for producing the tire 2 includes a step of preparing the green tire 2r and a step of pressurizing and heating the green tire 2r in the mold 58.

Pressurizing and heating the green tire 2r in the mold 58 is also referred to as vulcanization molding, and the step of pressurizing and heating the green tire 2r is also referred to as vulcanization step.

The vulcanization conditions, such as temperature, pressure, and time, for vulcanization molding of the green tire 2r in the mold 58 are not particularly limited, and vulcanization conditions set for conventional tires are adopted.

A mold commonly used as a tire mold is used as the mold 58.

Although not described in detail, the mold 58 has a cavity surface 60 on an inner surface thereof. The cavity surface 60 comes into contact with the outer surface of the green tire 2r to form the outer surface of the tire 2.

The mold 58 includes a tread ring 62. The tread ring 62 has a tread forming surface 64 on an inner surface thereof. The tread forming surface 64 is a part of the cavity surface 60. The tread forming surface 64 forms the tread 4.

The mold 58 is a segmented-type mold. The tread ring 62 includes a plurality of segments 66 aligned in the circumferential direction. The tread ring 62 is configured by combining these segments 66.

Although not shown, the segments 66 are movable in the radial direction. After the vulcanization step is completed, the mold 58 is opened in order to release the tire 2 from the mold 58. At this time, the segments 66 move radially outward. After the green tire 2r is placed in the mold 58, the segments 66 move radially inward. Accordingly, the mold 58 is closed and the vulcanization step is started.

As described above, the tread 4 of the tire 2 has the tread pattern. This tread pattern is formed on the tread 4 by projections 68 reflecting the shapes of the grooves 8 which form this tread pattern. The tread ring 62 includes the projections 68 corresponding to the grooves 8.

The tread 4 of the tire 2 has the circumferential narrow grooves 16. The projections 68 include narrow projections 70 reflecting the shapes of the circumferential narrow grooves 16. The narrow projections 70 extend continuously in the circumferential direction. The narrow projections 70 project radially inward from a reference surface 64B of the tread forming surface 64. The reference surface 64B of the tread forming surface 64 corresponds to the above-described virtual tread surface.

The tread pattern of the tire 2 has the circumferential main grooves 14, the longitudinal shallow grooves 34, and the lateral shallow grooves 32 as ordinary grooves in addition to the circumferential narrow grooves 16. Although not shown, each circumferential main groove 14 is formed by a thick projection reflecting the shape thereof. Each longitudinal shallow groove 34 is formed by a longitudinal projection reflecting the shape thereof. Each lateral shallow groove 32 is formed by a lateral projection reflecting the shape thereof.

As described above, the narrow projections 70 reflect the shapes of the circumferential narrow grooves 16. Each narrow projection 70 includes a plate portion 72, an intermediate portion 74, and an expansion portion 76. The plate portion 72 corresponds to the narrow groove portion 52 of the circumferential narrow groove 16. The intermediate portion 74 corresponds to the inflection portion 56. The expansion portion 76 corresponds to the wide portion 54.

As described above, each circumferential narrow groove 16 has the minimum width W1 in the narrow groove portion 52, and has the maximum width W2 in the wide portion 54. Therefore, each narrow projection 70 has a minimum width in the plate portion 72, and has a maximum width in the expansion portion 76.

The tread pattern of the tire 2 includes the transverse sipes 12 as sipes. Each transverse sipe 12 is formed by a blade 78.

As described above, each transverse sipe 12 connects the circumferential main groove 14 and the circumferential narrow groove 16. The blade 78 connects the thick projection (not shown) for the circumferential main groove 14 and the narrow projection 70 for the circumferential narrow groove 16.

In the method for producing the tire 2, after the vulcanization step is completed, the tire 2 is released from the mold 58. The tire 2 having the tread pattern shown in FIG. 1 is obtained.

The tread 4 becomes worn due to use. Accordingly, the grooves 8 gradually disappear.

In the present invention, a stage from a new state to disappearance of the narrow groove portions 52 of the circumferential narrow grooves 16 is an initial stage of wear. A stage from the disappearance of the narrow groove portions 52 to disappearance of the transverse sipes 12 is a middle stage of wear. A stage from the disappearance of the transverse sipes 12 to disappearance of the wide portions 54 of the circumferential narrow grooves 16, that is, disappearance of the circumferential narrow grooves 16, is a late stage of wear. The time when the circumferential narrow grooves 16 disappear is the timing for replacing the tire 2.

As described above, each circumferential narrow groove 16 is a narrow groove. In the initial stage of wear, when the tread 4 comes into contact with a road surface and becomes deformed, the pair of groove walls 16W of the circumferential narrow groove 16 come into contact with each other at the narrow groove portion 52. The main narrow land portions 40 located on both sides of the circumferential narrow groove 16 support each other. The deformation of the tread 4 is suppressed when the tread 4 comes into contact with a road surface. The tire 2 can reduce rolling resistance.

The groove volume of each circumferential narrow groove 16 is smaller than the groove volume of each circumferential main groove 14. Compared to a conventional tread in which all of the circumferential grooves 10 located between the two shoulder land portions 26 are composed of circumferential main grooves 14, there is a concern that the wet performance of the tire 2 is easily influenced by wear of the tread 4. However, in the initial stage of wear, even if the tread 4 becomes worn, the transverse sipes 12 continue to be exposed. Since each transverse sipe 12 can function as an edge component, the tire 2 can suppress a decrease in wet performance.

In the initial stage of wear, the tire 2 can suppress a decrease in wet performance due to wear, and can achieve reduction of rolling resistance.

In the middle stage of wear, the narrow groove portions 52 disappear, and the volume of the tread 4 decreases. The deformation of the tread 4 itself is suppressed, so that the tire 2 can maintain low rolling resistance. The exposure of the transverse sipes 12 continues, so that a decrease in wet performance is suppressed. In the middle stage of wear as well, the tire 2 can suppress a decrease in wet performance due to wear, and can achieve reduction of rolling resistance.

As described above, when the tread 4 becomes worn, the transverse sipes 12 disappear before the circumferential narrow grooves 16. In other words, even if the tread 4 becomes worn and the transverse sipes 12 disappear, the circumferential narrow grooves 16 remain. The wide portion 54 is provided on the groove bottom 16T side of each circumferential narrow groove 16.

In the late stage of wear, the wide portions 54 are exposed. The exposed wide portions 54 can contribute to ensuring the groove volume. In the late stage of wear as well, the tire 2 can suppress a decrease in wet performance.

In the late stage of wear, the volume of the tread 4 is further decreased. The deformation of the tread 4 itself is suppressed, so that the tire 2 can maintain low rolling resistance.

In the late stage of wear as well, the tire 2 can suppress a decrease in wet performance due to wear, and can achieve reduction of rolling resistance.

In the initial stage of wear, the deformation of the tread 4 is suppressed due to the action of the narrow groove portion 52 of each circumferential narrow groove 16. In the middle and subsequent stages of wear, the deformation of the tread 4 is suppressed due to the decrease in the volume of the tread 4. The tire 2 can maintain low rolling resistance from the new state until replacement of the tire 2 becomes necessary.

From the initial stage to the middle stage of wear, each transverse sipe 12 can function as an edge component. In the late stage of wear, each wide portion 54 can contribute to ensuring the groove volume. The tire 2 can maintain good wet performance from the new state until replacement of the tire 2 becomes necessary.

From the new state until replacement of the tire 2 becomes necessary, the tire 2 can suppress a decrease in wet performance due to wear, and can achieve reduction of rolling resistance.

As described above, in the method for producing the tire 2, after the vulcanization step is completed, the tire 2 is released from the mold 58. At this time, the segments 66 are moved radially outward, and the projections 68 and the blades 78 are pulled out from the tread 4.

Meanwhile, each blade 78 extends between the thick projection (not shown) and the narrow projection 70. In the mold 58, a connection portion between the blade 78 and the thick projection and a connection portion between the blade 78 and the narrow projection 70 are present.

The cross-sectional shape of each circumferential main groove 14 is tapered inward as shown in FIG. 2, for example. The thick projection for forming the circumferential main groove 14 is tapered toward its distal end. Therefore, deformation of the land portions 24 when the thick projection is pulled out is minimized. Moreover, a part of the main narrow land portion 40 is less likely to get caught at the connection portion between the blade 78 and the thick projection. Pulling out the thick projection from the tread 4 is less likely to cause an increase in stress that may cause chipping to occur at the tread 4.

In contrast, when the narrow projection 70 is pulled out from the tread 4, the expansion portion 76 passes through the narrow groove portion 52 having a narrower groove width than the wide portion 54. Pulling out the narrow projection 70 is accompanied by deformation of the main land portion 30. Since the width of the expansion portion 76 is wider than that of the plate portion 72, a part of the main narrow land portion 40 is likely to get caught at the connection portion between the narrow projection 70 and the blade 78. There is a concern that, when the narrow projection 70 is pulled out from the tread 4, high stress may be generated at the main narrow land portion 40. Depending on the degree of stress generated at the main narrow land portion 40, chipping may occur at the main narrow land portion 40.

However, in the tire 2, as described above, in the cross-section of the circumferential narrow groove 16 along the plane perpendicular to the length direction of the circumferential narrow groove 16, the contour of the inflection portion 56 is represented by the arc having a radius R1. The radius R1 of the arc representing the contour of the inflection portion 56 is larger than the length HW2 which is half the maximum width W2 of the wide portion 54.

In the tire 2, the contour of the portion between the narrow groove portion 52 and the wide portion 54 (i.e.,

the inflection portion 56) is represented by the arc having a large radius R1. The shape of the inflection portion 56 is formed such that the groove width thereof gradually increases from the narrow groove portion 52 toward the wide portion 54. When the projection 68 and the blade 78 are pulled out from the tread 4, the main narrow land portion 40 is less likely to get caught at the connection portion between the narrow projection 70 and the blade 78. Concentration of stress on a connection portion between the circumferential narrow groove 16 and the transverse sipe 12 is suppressed. The tire 2 can suppress occurrence of tread chipping when releasing the tire 2 from the mold 58.

The tire 2 can suppress occurrence of tread chipping when releasing the tire 2 from the mold 58 and a decrease in wet performance due to wear, and can achieve reduction of rolling resistance.

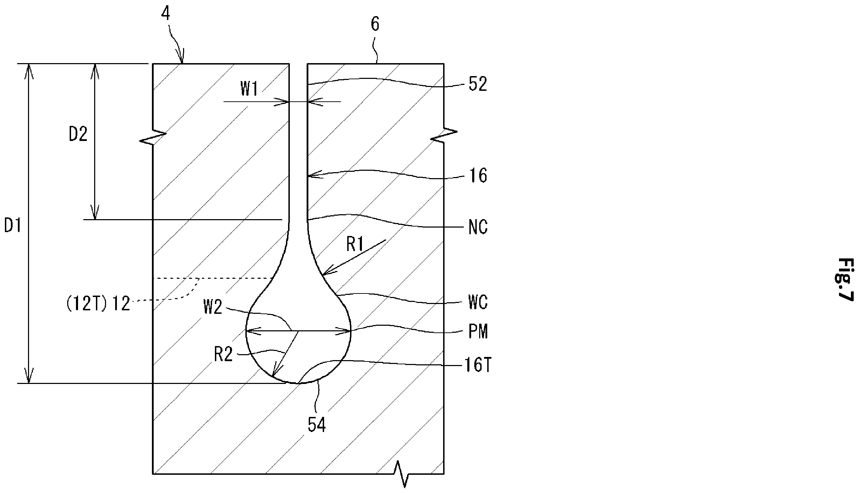

FIG. 7 shows a modification of the cross-sectional shape of the circumferential narrow groove 16 shown in FIG. 5. In the circumferential narrow groove 16 shown in FIG. 7, the radius R1 of the arc representing the contour of the inflection portion 56 is set to be smaller than that of the circumferential narrow groove 16 shown in FIG. 5, and the maximum width W2 of the wide portion 54 is increased compared to that of the circumferential narrow groove 16 shown in FIG. 5. The circumferential narrow groove 16 includes a wide portion 54 having a sufficient groove volume. The wide portion 54 can contribute to maintaining good wet performance in the late stage of wear.

In the present invention, by setting the radius R1 of the arc representing the contour of the inflection portion 56 and the maximum width W2 of the wide portion 54 as described above, it is possible to provide circumferential narrow grooves 16 having cross-sectional shapes that are optimal for the specifications of the tire 2 to which the circumferential narrow grooves 16 are applied.

The ratio W1/W2 of the minimum width W1 of the narrow groove portion 52 to the maximum width W2 of the wide portion 54 is preferably not less than 0.15 and not greater than 0.35.

When the ratio W1/W2 is set to be not less than 0.15, the main narrow land portion 40 is effectively inhibited from getting caught at the connection portion between the narrow projection 70 and the blade 78 when the projection 68 and the blade 78 are pulled out from the tread 4. Concentration of stress on the connection portion between the circumferential narrow groove 16 and the transverse sipe 12 can be effectively suppressed. The tire 2 can suppress occurrence of tread chipping when releasing the tire 2 from the mold 58. From this viewpoint, the ratio W1/W2 is more preferably not less than 0.20.

When the ratio W1/W2 is set to be not greater than 0.35, the wide portion 54 having a required groove volume is formed, so that the exposed wide portion 54 can contribute to maintaining wet performance even if the tread 4 becomes worn and each transverse sipe 12 disappears. From this viewpoint, the ratio W1/W2 is more preferably not greater than 0.30.

The minimum width W1 of the narrow groove portion 52 is preferably not greater than 2.5 mm. Accordingly, the two main narrow land portions 40 located on both sides of the circumferential narrow groove 16 support each other, so that deformation of the main land portion 30 is effectively suppressed. The tire 2 can reduce rolling resistance. From this viewpoint, the minimum width W1 is more preferably not greater than 2.0 mm.

As described above, in the cross-section of the circumferential narrow groove 16 shown in FIG. 5, the contour of the wide portion 54 is represented by the arc having a radius R2. In this case, the ratio R1/R2 of the radius R1 of the arc representing the contour of the inflection portion 56 to the radius R2 of the arc representing the contour of the wide portion 54 is preferably not less than 1.5. Accordingly, an increase in stress generated at the inflection portion 56 when the projection 68 and the blade 78 are pulled out from the tread 4 is suppressed. The tire 2 can suppress occurrence of tread chipping when releasing the tire 2 from the mold 58. From this viewpoint, the ratio R1/R2 is more preferably not less than 2.0.

The ratio D2/D1 of the groove depth D2 of the narrow groove portion 52 to the groove depth D1 of the circumferential narrow groove 16 is preferably not less than 0.25 and not greater than 0.70.

When the ratio D2/D1 is set to be not less than 0.25, the narrow groove portion 52 can contribute to suppressing deformation of the main land portion 30. The tire 2 can achieve reduction of rolling resistance. From this viewpoint, the ratio D2/D1 is more preferably not less than 0.30.

When the ratio D2/D1 is set to be not greater than 0.70, the contour of the inflection portion 56 in the tire 2 can be represented by the arc having a large radius R1. An increase in stress generated at the inflection portion 56 when the projection 68 and the blade 78 are pulled out from the tread 4 is suppressed. The tire 2 can suppress occurrence of tread chipping when releasing the tire 2 from the mold 58. From this viewpoint, the ratio D2/D1 is more preferably not greater than 0.65.

As shown in FIG. 5, the groove depth D4 of the transverse sipe 12 is deeper than the groove depth D2 of the narrow groove portion 52. Accordingly, the transverse sipe 12 can function as an edge component from the initial stage to the middle stage of wear. The tire 2 can maintain good wet performance. The groove depth D4 of the transverse sipe 12 is shallower than the groove depth D3 from the groove opening 16M of the circumferential narrow groove 16 to the position PM at which the wide portion 54 has the maximum width W2. Accordingly, the influence of the transverse sipe 12 on the stiffness of the tread 4 is reduced. The narrow groove portion 52 can effectively contribute to suppressing deformation of the main land portion 30. The tire 2 can achieve reduction of rolling resistance. Moreover, the length of the connection portion between the circumferential narrow groove 16 and the transverse sipe 12 is set to an appropriate length. The main narrow land portion 40 is effectively inhibited from getting caught at the connection portion between the narrow projection 70 and the blade 78 when the projection 68 and the blade 78 are pulled out from the tread 4. Concentration of stress on the connection portion between the circumferential narrow groove 16 and the transverse sipe 12 is effectively suppressed. The tire 2 can suppress occurrence of tread chipping when releasing the tire 2 from the mold 58.

The tire 2 can suppress occurrence of tread chipping when releasing the tire 2 from the mold 58 and a decrease in wet performance due to wear, and can achieve reduction of rolling resistance. From this viewpoint, it is preferable that the groove depth D3 from the groove opening 16M of the circumferential narrow groove 16 to the position PM at which the wide portion 54 has the maximum width W2, the groove depth D4 of the transverse sipe 12, and the groove depth D2 of the narrow groove portion 52 satisfy the following formula.

$$\text{Formula: } D2 \leq D4 \leq D3$$

In the case where the groove depth D3 from the groove opening 16M of the circumferential narrow groove 16 to the position PM at which the wide portion 54 has the maximum width W2, the groove depth D4 of the transverse sipe 12, and the groove depth D2 of the narrow groove portion 52 satisfy the above formula, from the viewpoint that the tire 2 can suppress occurrence of tread chipping when releasing the tire 2 from the mold 58 and a decrease in wet performance due to wear, and can achieve reduction of rolling resistance, it is further preferable that the ratio D2/D4 of the groove depth D2 of the narrow groove portion 52 to the groove depth D4 of the transverse sipe 12 is not less than 0.40 and not greater than 0.90 and the ratio D3/D4 of the groove depth D3 from the groove opening 16M of the circumferential narrow groove 16 to the position PM at which the wide portion 54 has the maximum width W2, to the groove depth D4 of the transverse sipe 12, is not less than 1.05 and not greater than 2.00.

In FIG. 3, an angle $\theta$ is an angle of the transverse sipe 12 with respect to the axial direction.

The angle $\theta$ is preferably not less than -35 degrees and not greater than 35 degrees. In this case, concentration of stress on a corner portion of the main block 50, that is, a portion where the transverse sipe 12 joins the circumferential narrow groove 16, is suppressed. The tire 2 can suppress occurrence of tread chipping when releasing the tire 2 from the mold 58. From this viewpoint, the angle $\theta$ is more preferably not less than -25 degrees and not greater than 25 degrees.

The tread pattern of the tire 2 has a plurality of pitch patterns 80 aligned in the circumferential direction. In other words, the tread pattern is configured by combining the plurality of pitch patterns 80. In the present specification, the pitch pattern refers to a unit pattern that is repeated in the tire circumferential direction.

In FIG. 1, an alternate long and two short dashes line PL extending in the axial direction is the boundary between two adjacent pitch patterns 80. In the present invention, the boundary PL is defined as a line that extends straight in the axial direction without intersecting any grooves other than the circumferential grooves 10. The pattern located between two adjacent boundaries is the pitch pattern 80, and all the pitch patterns 80 constituting the tread pattern are the same.

In FIG. 1, a length indicated by a double-headed arrow L is the length in the circumferential direction of the pitch pattern 80. All the pitch patterns 80 constituting the tread pattern have the same length L in the circumferential direction. A length indicated by a double-headed arrow L1 is the interval between two transverse sipes 12 aligned in the circumferential direction.

In the tire 2, the ratio L/L1 of the length L in the circumferential direction of the pitch pattern 80 to the interval L1 between the two transverse sipes 12 aligned in the circumferential direction is preferably not less than 1.0 and not greater than 3.5.

When the ratio L/L1 is set to be not less than 1.0, each transverse sipe 12 can effectively function as an edge component. The tire 2 can maintain good wet performance. From this viewpoint, the ratio L/L1 is more preferably not less than 1.5.

When the ratio L/L1 is set to be not greater than 3.5, the influence of the transverse sipe 12 on the stiffness of the tread 4 is reduced, so that the narrow groove portion 52 can effectively contribute to suppressing deformation of the main land portion 30. The tire 2 can achieve reduction of rolling resistance. The number of connection portions between the circumferential narrow grooves 16 and the transverse sipes 12 can be set to an appropriate number. The tire 2 can suppress occurrence of tread chipping when releasing the tire 2 from the mold 58. From this viewpoint, the ratio L/L1 is more preferably not greater than 3.0.

For example, as shown in FIG. 3, the circumferential narrow groove 16 extends in the circumferential direction while meandering.

The circumferential narrow groove 16 includes first longitudinal narrow grooves 82 close to the first end TE1 side of the tread surface 6, second longitudinal narrow grooves 84 close to the second end TE2 side, and connection narrow grooves 86 connecting the first longitudinal narrow grooves 82 and the second longitudinal narrow grooves 84.

Among the connection narrow grooves 86, the connection narrow grooves 86 connecting the first longitudinal narrow grooves 82 located on the first circumferential direction side and the second longitudinal narrow grooves 84 located on the second circumferential direction side are also referred to as first connection narrow grooves 86a. The connection narrow grooves 86 connecting the second longitudinal narrow grooves 84 located on the first circumferential direction side and the first longitudinal narrow grooves 82 located on the second circumferential direction side are also referred to as second connection narrow grooves 86b.

When a unit configured by connecting the first longitudinal narrow groove 82, the first connection narrow groove 86a, the second longitudinal narrow groove 84, and the second connection narrow groove 86b in this order is defined as a groove unit, the circumferential narrow groove 16 is formed by connecting a plurality of such groove units in the circumferential direction. The first longitudinal narrow grooves 82 and the second longitudinal narrow grooves 84 are arranged alternately in the circumferential direction.

In the circumferential narrow groove 16 located between the equator plane EL and the first end TE1 of the tread surface 6, the first longitudinal narrow grooves 82 located on the axially outer side are also referred to as outer longitudinal narrow grooves 88, and the second longitudinal narrow grooves 84 located on the axially inner side are also referred to as inner longitudinal shallow grooves 90.

Although not shown, in the circumferential narrow groove 16 located between the equator plane EL and the second end TE2 of the tread surface 6, first longitudinal narrow grooves 82 are located on the axially inner side, and second longitudinal narrow grooves 84 are located on the axially outer side. The second longitudinal narrow grooves 84 located on the axially outer side are also referred to as outer longitudinal narrow grooves 88, and the first longitudinal narrow grooves 82 located on the axially inner side are also referred to as inner longitudinal shallow grooves 90.

As described above, when the tread 4 comes into contact with a road surface and becomes deformed, the groove walls 16W of each circumferential narrow groove 16 come into contact with each other at the narrow groove portion 52 thereof. Here, since the circumferential narrow groove 16 does not extend straight in the circumferential direction but extends in the circumferential direction while meandering, the groove walls 16W effectively engage each other. The main narrow land portions 40 located on both sides of the circumferential narrow groove 16 restrain each other. Deformation of the main land portion 30 is effectively suppressed. The tire 2 can further reduce rolling resistance. From this viewpoint, it is preferable that the circumferential narrow groove 16 includes the first longitudinal narrow grooves 82 close to the first end TE1 side of the tread surface 6, the second longitudinal narrow grooves 84 close to the second end TE2 side, and the connection narrow grooves 86 connecting the first longitudinal narrow grooves 82 and the second longitudinal narrow grooves 84, and the first longitudinal narrow grooves 82 and the second longitudinal narrow grooves 84 are arranged alternately in the circumferential direction.

As shown in FIG. 3, each first transverse sipe 12a of the first main narrow land portion 42 joins the second longitudinal narrow groove 84 closer to the second end TE2 of the tread surface 6, and each second transverse sipe 12b of the second main narrow land portion 44 joins the first longitudinal narrow groove 82 closer to the first end TE1 of the tread surface 6.

In the main land portion 30, each first transverse sipe 12a and each second transverse sipe 12b are arranged without any interval therebetween. Compared to the case where each first transverse sipe 12a and each second transverse sipe 12b are arranged with an interval therebetween, each first transverse sipe 12a and each second transverse sipe 12b can effectively function as edge components. The tire 2 has good wet performance. From this viewpoint, it is preferable that each first transverse sipe 12a of the first main narrow land portion 42 joins the second longitudinal narrow groove 84 closer to the second end TE2 of the tread surface 6, and each second transverse sipe 12b of the second main narrow land portion 44 joins the first longitudinal narrow groove 82 closer to the first end TE1 of the tread surface 6.

As described above, the crown circumferential main groove 20 is located on the equator plane EL. For example, as shown in FIG. 3, the crown circumferential main groove 20 does not extend straight in the circumferential direction but extends in a zigzag manner in the circumferential direction. Specifically, the crown circumferential main groove 20 includes first peaks 20ETa closer to the first end TE1 of the tread surface 6 and second peaks 20ETb closer to the second end TE2 (not shown) of the tread surface 6. The crown circumferential main groove 20 extends in a zigzag manner while passing through the first peaks 20ETa and the second peaks 20ETb alternately in the circumferential direction.

The crown circumferential main groove 20 can function as an edge component from the new state until replacement of the tire 2 becomes necessary. The crown circumferential main groove 20 can contribute to suppressing a decrease in wet performance due to wear. From this viewpoint, it is preferable that the crown circumferential main groove 20 includes the first peaks 20ETa closer to the first end TE1 of the tread surface 6 and the second peaks 20ETb closer to the second end TE2 of the tread surface 6, and extends in a zigzag manner while passing through the first peaks 20ETa and the second peaks 20ETb alternately in the circumferential direction.

For example, as shown in FIG. 3, the first peaks 20ETa of the crown circumferential main groove 20 overlap the outer longitudinal narrow grooves 88 of the circumferential narrow groove 16 located on the first end TE1 side of the tread surface 6 with respect to the crown circumferential main groove 20, in the axial direction. Although not shown, the second peaks 20ETb of the crown circumferential main groove 20 overlap the outer longitudinal narrow grooves 88 of the circumferential narrow groove 16 located on the second end TE2 side of the tread surface 6 with respect to the crown circumferential main groove 20, in the axial direction. Each of the first peaks 20ETa and the second peaks 20ETb of the crown circumferential main groove 20 overlaps the outer longitudinal narrow groove 88 of the circumferential narrow groove 16 located adjacent to the crown circumferential main groove 20, in the axial direction.

In the tire 2, even though the crown circumferential main groove 20 extends in a zigzag manner in the circumferential direction, the difference between the maximum width and the minimum width of the inner main narrow land portion 46 located between the crown circumferential main groove 20 and each circumferential narrow groove 16 can be decreased. The change in the state of contact between the tread 4 and a road surface while the tire 2 makes one rotation is suppressed. In the tire 2, occurrence of uneven wear is suppressed. Each circumferential narrow groove 16 and each transverse sipe 12 can stably exhibit their functions from the new state until replacement of the tire 2 becomes necessary. From the new state until replacement of the tire 2 becomes necessary, the tire 2 can maintain good wet performance and low rolling resistance. From this viewpoint, in the case where the crown circumferential main groove 20 includes the first peaks 20ETa closer to the first end TE1 of the tread surface 6 and the second peaks 20ETb closer to the second end TE2 of the tread surface 6 and extends in a zigzag manner while passing through the first peaks 20ETa and the second peaks 20ETb alternately in the circumferential direction, it is more preferable that each of the first peaks 20ETa and the second peaks 20ETb of the crown circumferential main groove 20 overlaps the outer longitudinal narrow groove 88 of the circumferential narrow groove 16 located adjacent to the crown circumferential main groove 20, in the axial direction. In this case, from the viewpoint that the tire 2 can ensure the stiffness of the corner portion of the main block 50 formed at the portion where each transverse sipe 12 joins the crown circumferential main groove 20, and can effectively suppress occurrence of tread chipping, it is further preferable that the transverse sipes 12 joining the outer longitudinal narrow grooves 88 join the crown circumferential main groove 20 at the first peaks 20ETa and the second peaks 20ETb of the crown circumferential main groove 20 which overlap the outer longitudinal narrow grooves 88 in the axial direction, respectively.

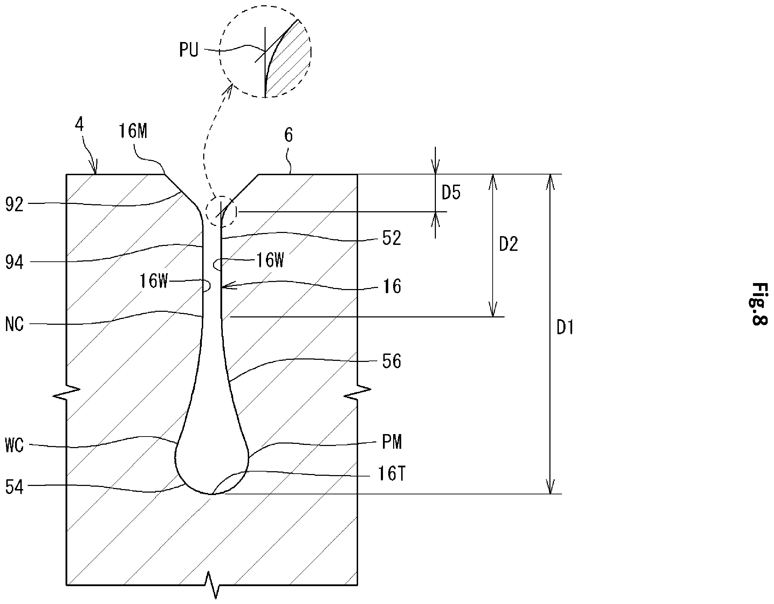

FIG. 8 shows another modification of the circumferential narrow groove 16. In the circumferential narrow groove 16 shown in FIG. 8, a portion at the groove opening 16M thereof is processed in a tapered manner. The narrow groove portion 52 of the circumferential narrow groove 16 includes a tapered portion 92 and a narrow groove body 94.

The circumferential narrow groove 16 has the same configuration as the circumferential narrow groove 16 shown in FIG. 5, except that the narrow groove portion 52 is composed of the tapered portion 92 and the narrow groove body 94.

The tapered portion 92 includes the groove opening 16M of the circumferential narrow groove 16. The tapered portion 92 is tapered inward from the groove opening 16M. The contour of the tapered portion 92 shown in FIG. 8 is represented by a straight line. This contour may be represented by a curve. A length indicated by a double-headed arrow D5 is the groove depth of the tapered portion 92.

The narrow groove body 94 is located radially inward of the tapered portion 92. The narrow groove body 94 is connected to the tapered portion 92. The narrow groove body 94 extends straight in the depth direction of the circumferential narrow groove 16. The contour of the narrow groove body 94 is represented by a straight line.

In the circumferential narrow groove 16, the pair of groove walls 16W of the circumferential narrow groove 16 come into contact with each other at the narrow groove body 94 of the narrow groove portion 52 when the tread 4 comes into contact with a road surface and becomes deformed.

In FIG. 8, a position indicated by reference character PU is the boundary between the tapered portion 92 and the narrow groove body 94. The boundary PU is represented by the point of intersection of the contour line of the tapered portion 92 and the contour line of the narrow groove body 94. As shown in FIG. 8, in the case where the boundary portion between the tapered portion 92 and the narrow groove body 94 is rounded, the boundary PU is represented by the point of intersection of an extension line of the contour line of the tapered portion 92 and an extension line of the contour line of the narrow groove body 94.

From the viewpoint that the tire 2 can effectively suppress concentration of strain on the groove opening 16M of the circumferential narrow groove 16 while ensuring the groove volume of the circumferential narrow groove 16, the ratio (D5/D1) of the groove depth D5 of the tapered portion 92 to the groove depth D1 of the circumferential narrow groove 16 is preferably not less than 0.12 and not greater than 0.14.

As is obvious from the above description, according to the present invention, the heavy duty tire 2 which can suppress occurrence of tread chipping when released from a mold and a decrease in wet performance due to wear and can achieve reduction of rolling resistance, is obtained.

The above-described technology capable of suppressing occurrence of tread chipping when releasing from a mold and a decrease in wet performance due to wear and achieving reduction of rolling resistance, can be applied to various tires.

**Claims**

1. A heavy duty tire (2) comprising a tread (4) configured to come into contact with a road surface, wherein

the tread (4) has a tread pattern including a plurality of circumferential grooves (10) extending continuously in a circumferential direction and a plurality of transverse sipes (12) aligned in the circumferential direction,

the plurality of circumferential grooves (10) include a plurality of circumferential main grooves (14, 18, 20) and one or more circumferential narrow grooves (16),

each of the plurality of circumferential main grooves (14, 18, 20) has a pair of groove walls (14W) which do not come into contact with each other even if the tread (4) comes into contact with a road surface and becomes deformed,

the plurality of circumferential main grooves (14, 18, 20) demarcate a plurality of land portions (24, 26, 28, 30) aligned in an axial direction, in the tread (4),

the plurality of land portions (24, 26, 28, 30) include two shoulder land portions (26) each located on an outermost side in the axial direction and one or more main land portions (30) located between the two shoulder land portions (26),

each of the one or more main land portions (30) has the circumferential narrow groove (16),

the circumferential narrow groove (16) demarcates two main narrow land portions (40) in the main land portion (30), thereby forming a plurality of main narrow land portions (40) in the tread (4),

among the plurality of main narrow land portions (40), at least one main narrow land portion (40) has the plurality of transverse sipes (12),

the plurality of transverse sipes (12) connect the circumferential main groove (14, 18, 20) and the circumferential narrow groove (16),

the circumferential narrow groove (16) includes a narrow groove portion (52) including a groove opening (16M) of the circumferential narrow groove (16), a wide portion (54) including a groove bottom (16T) of the circumferential narrow groove (16), and an inflection portion (56) connecting the narrow groove portion (52) and the wide portion (54),

a pair of groove walls (16W) of the circumferential narrow groove (16) come into contact with each other at the narrow groove portion (52) when the tread (4) comes into contact with a road surface and becomes deformed,

a maximum width W2 of the wide portion (54) is wider than a minimum width W1 of the narrow groove portion (52),

a contour of the inflection portion (56) is represented by an arc having a radius R1 in a cross-section of the circumferential narrow groove (16) along a plane perpendicular to a length direction of the circumferential narrow groove (16), and

the radius R1 is larger than a length HW2 which is half the maximum width W2 of the wide portion (54).

2. The heavy duty tire (2) according to claim 1, wherein a ratio W1/W2 of the minimum width W1 of the narrow groove portion (52) to the maximum width W2 of the wide portion (54) is not less than 0.15 and not greater than 0.35.

3. The heavy duty tire (2) according to claim 1 or 2, wherein the minimum width W1 of the narrow groove portion (52) is not greater than 2.5 mm.

4. The heavy duty tire (2) according to any one of claims 1 to 3, wherein

a contour of the wide portion (54) is represented by an arc having a radius R2 in the cross-section of the circumferential narrow groove (16) along the plane perpendicular to the length direction of the circumferential narrow groove (16), and
a ratio R1/R2 of the radius R1 of the arc representing the contour of the inflection portion (56) to the radius R2 of the arc representing the contour of the wide portion (54) is not less than 1.5.

5. The heavy duty tire (2) according to any one of claims 1 to 4, wherein a ratio D2/D1 of a groove depth D2 of the narrow groove portion (52) to a groove depth D1 of the circumferential narrow groove (16) is not less than 0.25 and not greater than 0.70.

6. The heavy duty tire (2) according to any one of claims 1 to 5, wherein a groove depth D3 from the groove opening (16M) of the circumferential narrow groove (16) to a position (PM) at which the wide portion (54) has the maximum width W2, a groove depth D4 of the transverse sipe (12), and a groove depth D2 of the narrow groove portion (52) satisfy the following formula,

$$\text{formula: } D2 \leq D4 \leq D3.$$

7. The heavy duty tire (2) according to any one of claims 1 to 6, wherein an angle ($\theta$) of the transverse sipe (12) with respect to the axial direction is not less than -35 degrees and not greater than 35 degrees.

8. The heavy duty tire (2) according to any one of claims 1 to 7, wherein

the tread pattern includes a plurality of pitch patterns (80) aligned in the circumferential direction and having the same length in the circumferential direction,

the plurality of pitch patterns (80) are the same as each other, and

a ratio L/L1 of a length L in the circumferential direction of the pitch pattern (80) to an interval L1 between the two transverse sipes (12) aligned in the circumferential direction is not less than 1.0 and not greater than 3.5.

# Fig.1

**Fig.2**

**Fig.3**

**Fig.4**

**Fig.5**

**Fig.6**

# Fig.7

**Fig.8**

Europäisches
Patentamt

European
Patent Office

Office européen
des brevets

## EUROPEAN SEARCH REPORT

**Application Number**

EP 24 22 2717

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 458 588 A1 (SUMITOMO RUBBER IND [JP]) 6 November 2024 (2024-11-06) * paragraphs [0078], [0111], [0139], [0141], [0145]; figures 1-5 * | 1-4,7,8 | INV. B60C11/03 B60C11/13 B60C11/12 |
| X | EP 4 119 358 A1 (SUMITOMO RUBBER IND [JP]) 18 January 2023 (2023-01-18) * paragraphs [0056] - [0061]; figures 1-4 * | 1-8 | |
| X | EP 4 183 598 A1 (SUMITOMO RUBBER IND [JP]) 24 May 2023 (2023-05-24) * paragraph [0028]; figure 4A * | 1,2,6-8 | |
| X | WO 2017/174925 A1 (MICHELIN & CIE [FR]) 12 October 2017 (2017-10-12) * paragraph [0039]; figures 7,8 * | 1 | |

**TECHNICAL FIELDS SEARCHED (IPC)**

B60C

The present search report has been drawn up for all claims

| Place of search | Date of completion of the search | Examiner |
|---|---|---|
| Munich | 6 June 2025 | Brito, Fernando |

EPO FORM 1503 03.82 (P04C01)

## ANNEX TO THE EUROPEAN SEARCH REPORT
## ON EUROPEAN PATENT APPLICATION NO.

EP 24 22 2717

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | Publication date | Patent family member(s) | | Publication date |
|---|---|---|---|---|---|
| EP 4458588 | A1 | 06-11-2024 | EP | 4458588 A1 | 06-11-2024 |
| | | | JP | 2024160587 A | 14-11-2024 |
| EP 4119358 | A1 | 18-01-2023 | EP | 4119358 A1 | 18-01-2023 |
| | | | US | 2023023252 A1 | 26-01-2023 |
| EP 4183598 | A1 | 24-05-2023 | NONE | | |
| WO 2017174925 | A1 | 12-10-2017 | BR | 112018070716 A2 | 12-02-2019 |
| | | | CN | 108883668 A | 23-11-2018 |
| | | | EP | 3439898 A1 | 13-02-2019 |
| | | | FR | 3049896 A1 | 13-10-2017 |
| | | | US | 2020346495 A1 | 05-11-2020 |
| | | | WO | 2017174925 A1 | 12-10-2017 |

EPO FORM P0459

For more details about this annex : see Official Journal of the European Patent Office, No. 12/82

**REFERENCES CITED IN THE DESCRIPTION**

**Patent documents cited in the description**

- JP 2017094891 A